# DEMANDE DE BREVET EUROPEEN

(11) **EP 3 764 569 A1**
(43) Date de publication de la demande: **13.01.2021**
(21) Numéro de dépôt: 20184376.0
(22) Date de dépôt: 07.07.2020
(51) Int. Cl.: H04B 17/12, H04B 17/27, H04B 17/318, H04B 17/23, H01Q 1/12

(54) **DISPOSITIF ET PROCÉDÉ D'ASSISTANCE À L'ORIENTATION D'UNE ANTENNE**

(30) Priorité: 08.07.2019 FR 1907604
(71) Demandeur: D-Home Smaart, 51110 Warmeriville (FR)
(72) Inventeur: ROUSSEL, Denys, 51110 Warmeriville (FR)
(74) Mandataire: Hugues, Catherine

(57) **Abrégé**

L'invention concerne un dispositif d'assistance à l'orientation d'une antenne (1), comportant un appareil mobile (3) pourvu de moyens de genèse d'un signal représentatif de la qualité de ladite orientation, dans lequel ladite antenne (1) comporte des moyens de mesure de l'intensité du signal radioélectrique reçu, tandis que ledit appareil mobile (3) est pourvu de moyens de traitement des données mesurées, consistant en au moins une application logicielle exécutée :
- pour exploiter des données de géolocalisation de ladite antenne (1), ainsi que des caractéristiques au moins de géolocalisation et de puissance d'émission, d'une pluralité d'émetteurs (2a, 2b, 2c, 2d, 2e) afin d'activer des moyens de fourniture automatique d'une liste d'émetteurs potentiels (2a, 2c, 2e),
- pour comparer les données de géolocalisation de ladite antenne (1) avec celles de l'émetteur (2a) sélectionné, pour activer des moyens de genèse d'un signal représentatif de la direction géographique vers laquelle l'antenne (1) doit être orientée, et
- pour exploiter les données relatives à l'intensité du signal reçu par l'antenne (1), et activer lesdits moyens de genèse d'un signal représentatif de la qualité de ladite orientation géographique.

L'invention concerne également un procédé pour mettre en œuvre ce dispositif.

## Description

La présente invention concerne le domaine des antennes de réception télé et/ou radiodiffusion, et entend proposer une solution permettant à un opérateur de procéder avec rapidité et efficacité aux incontournables opérations de réglage, succédant à leur installation, et dont le succès détermine la qualité du signal radioélectrique réceptionné et par conséquent restitué par une antenne.

A l'heure actuelle, différents systèmes ayant pour vocation de guider un opérateur dans le cadre de telles manipulations, tendant à orienter convenablement une antenne vers un émetteur donné, ont d'ores et déjà été développés. Ainsi sont notamment connues des solutions reposant sur la mise en œuvre d'un appareil portable, tels que par exemple un mesureur de champ, conçu apte à fournir, au fur et à mesure de l'accomplissement du réglage, des indications directement exploitables par l'installateur, informant ce dernier en temps réel de la direction géographique vers laquelle il convient de diriger l'antenne. En somme, de telles solutions permettent classiquement de guider l'opérateur tout au long du processus d'installation, au moyen d'indications limpides et évolutives affichées sur un appareil de mesure spécifique. L'opérateur se trouve par conséquent affranchi du recours à des solutions complexes ainsi que de tous tâtonnements intempestifs et chronophages.

Le but de la présente invention est de fournir une solution alternative, plus aboutie que celles disponibles sur le marché actuellement, en vue d'augmenter le degré d'assistance procurée à l'opérateur pour lui procurer une solution lui permettant de procéder à l'orientation géographique d'une antenne au moyen d'un appareillage largement disponible.

A cet effet, la présente invention a pour objet un dispositif d'assistance à l'orientation d'une antenne en direction d'un émetteur, ladite antenne étant destinée à réceptionner un signal radioélectrique émis par l'émetteur, ledit dispositif comportant des moyens de mesure de l'intensité du signal radioélectrique reçu en provenance de l'émetteur couplés à des moyens de transmission des données mesurées à travers un réseau de communication, ainsi qu'un appareil mobile pourvu de moyens de réception desdites données mesurées, de moyens de traitement des données mesurées reçues et de moyens de genèse d'un signal représentatif de la qualité de ladite orientation, appareil mobile est, caractérisé en ce que les moyens de mesure de l'intensité du signal radioélectrique reçu par l'antenne en provenance de l'émetteur sont intégrés à l'antenne et en ce que lesdits moyens de traitement consistent en au moins une application logicielle exécutée:
- pour exploiter des données de géolocalisation de ladite antenne relevées par un système de positionnement ou stockées dans des moyens mémoire dudit appareil mobile, ainsi que des caractéristiques au moins de géolocalisation et de puissance d'émission, d'une pluralité d'émetteurs enregistrées dans une base de données stockée dans les moyens mémoire dudit appareil mobile ou d'un serveur distant, et activer des moyens de fourniture d'une liste d'émetteurs potentiels via une interface utilisateur dudit appareil mobile,
- pour comparer les données de géolocalisation de ladite antenne avec celles de l'émetteur sélectionné, afin d'activer des moyens de genèse d'un signal représentatif de la direction géographique vers laquelle l'antenne doit être orientée, et
- pour exploiter les données relatives à l'intensité du signal reçu par l'antenne, et activer lesdits moyens de genèse d'un signal représentatif de la qualité de ladite orientation.

Conformément à une caractéristique du dispositif selon l'invention, les moyens de transmission des données mesurées sont préférentiellement définis par une interface de communication de type Bluetooth ou Wi-fi, solidaire de ladite antenne.

Par ailleurs, il a également été prévu que le système de positionnement peut comporter un récepteur/émetteur de position et une boussole.

De plus, ledit appareil mobile peut encore avantageusement comporter des moyens de détermination de la topographie du terrain s'étendant autour de ladite antenne.

Les moyens de genèse d'un signal représentatif de la qualité de l'orientation sont quant à eux préférentiellement définis par des moyens de genèse d'un signal lumineux et/ou des moyens de genèse d'un signal sonore.

Ces derniers peuvent en outre être conçus aptes à générer un signal d'intensité variable.

La présente invention concerne également un procédé d'assistance à l'orientation géographique d'une antenne destinée à réceptionner un signal radioélectrique émis par un émetteur, au moyen d'un dispositif tel que précédemment décrit, caractérisé par les étapes suivantes :
- Identification de ladite antenne et mise en œuvre de moyens de récupération automatique de ses données de géolocalisation,
- Mise en œuvre des moyens de traitement de données de l'appareil mobile pour traiter les données de géolocalisation de ladite antenne en vue d'une détermination d'au moins un émetteur approprié, à partir des données de géolocalisation de l'antenne et d'un enregistrement de données relatives à des caractéristiques au moins de géolocalisation et de puissance d'émission d'une pluralité d'émetteurs,
- Mise en œuvre de moyens de détermination et d'indication automatique d'une direction d'orientation géographique privilégiée de ladite antenne, à partir de ses données de géolocalisation et de celles de l'émetteur approprié sélectionné,

- Connexion dudit appareil mobile à ladite antenne via ledit réseau de communication, caractérisé en ce qu'il comporte en outre une étape
- de mesure de la puissance du signal reçu par l'antenne en provenance de l'émetteur sélectionné et d'exploitation des données mesurées, ainsi qu'une étape
- d'émission d'un signal représentatif du niveau de réception du signal radioélectrique par l'antenne.

Avantageusement, il est prévu que la détermination d'au moins un émetteur approprié consiste à mettre en œuvre des moyens de catégorisation automatique des émetteurs disponibles en fonction au moins de leur puissance d'émission et de leur proximité par rapport à ladite antenne.

De manière préférentielle, pour catégoriser les émetteurs disponibles, il est prévu dans le cadre du présent procédé de tenir compte, le cas échéant, des données relevées par des moyens de détermination de la topographie du terrain s'étendant autour de ladite antenne que comporte ledit appareil mobile.

Le procédé selon l'invention est encore caractérisé en ce que les données de géolocalisation de ladite antenne sont récupérées automatiquement, en temps réel, à partir d'un système de positionnement de l'appareil mobile, ou à partir de données préalablement enregistrées dans les moyens mémoire dudit appareil mobile.

Par ailleurs, il a également été imaginé que lors de l'émission d'un signal représentatif du niveau de réception du signal par l'antenne, on active également des moyens de fourniture d'une indication relative à la qualité du niveau de réception.

L'invention sera mieux comprise, et d'autres caractéristiques et avantages de l'invention apparaîtront à la lumière de la description qui suit en relation avec le dessin annexé illustrant une vue schématique du dispositif selon l'invention.

Comme indiqué ci-dessus, la présente invention entend proposer une solution permettant de guider un opérateur lors de la mise en service et en particulier du réglage d'une antenne 1 de réception télédiffusion et/ou radiodiffusion.

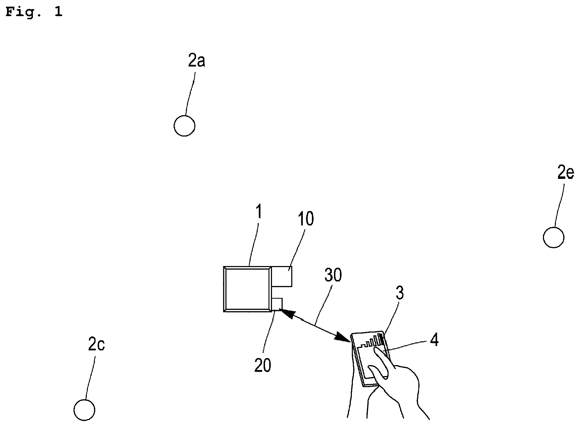

A cet effet, dans la variante de réalisation du dispositif selon l'invention illustrée à la figure 1, l'antenne 1 comprend d'une part des moyens de mesure 10 de l'intensité du signal radioélectrique qu'elle reçoit d'un émetteur 2a et d'autre part des moyens de transmission 20 de ces données mesurées, via un réseau de communication 30 de type notamment Bluetooth ou Wi-Fi, vers un téléphone portable 3 ou tout autre terminal mobile de type notamment tablette ou montre connectée fonctionnant sous les systèmes iOS ou Android classiques.

Dans le cadre de l'invention, les moyens mémoire de ce dernier comportent une application logicielle spécifiquement développée pour permettre l'assistance à l'orientation de l'antenne 1 au travers d'une interface utilisateur du téléphone portable 3, notamment son écran 4, permettant, entre autres, l'affichage d'un signal indicatif de la direction géographique vers laquelle orienter l'antenne 1 et d'un signal représentatif de la qualité de l'orientation géographique de l'antenne 1.

Plus précisément, cette application logicielle est programmée pour exploiter dans un premier temps des données de géolocalisation de l'antenne 1, relevées le cas échéant automatiquement par un système de positionnement dont le téléphone portable 3 est équipé ou introduites manuellement par l'opérateur dans les moyens mémoire du téléphone 3.

En somme, selon le cas, lors du lancement de l'application logicielle, l'utilisateur placé à proximité de l'antenne 1 introduit d'abord les données d'identification de cette dernière, sous forme de code. Il a ensuite la possibilité de provoquer la récupération automatique des données de géolocalisation de l'antenne 1, au travers du système de positionnement du téléphone portable 3, comprenant avantageusement au moins un récepteur/émetteur de position ainsi qu'une boussole. De manière alternative, l'utilisateur peut également introduire manuellement les coordonnées géographiques correspondantes dans les moyens mémoire du téléphone portable 3.

Les données de géolocalisation de l'antenne 1 servent ensuite de base à l'application logicielle pour sélectionner une liste d'émetteurs potentiels, par exemple 2a, 2c, 2e, parmi une pluralité d'émetteurs 2a, 2b, 2c, 2d, 2e etc., enregistrés dans une base de données stockée dans les moyens mémoire du téléphone portable 3 ou d'un serveur distant (non illustré).

Plus précisément, cette liste est établie à la fois en tenant compte au moins des données de localisation géographique de l'antenne 1, des données de géolocalisation des émetteurs 2a, 2b, 2c, etc., et des puissances de ces derniers. Ainsi, l'application est programmée pour interroger la base de données et effectuer plusieurs tris au cours desquels elle va procéder de la manière suivante :
- Établissement de la longueur maximale « Ra » du rayon dans lequel l'antenne 1 détecte des émetteurs de catégorie de puissance « A »,
- Tri des émetteurs de puissance supérieure à « Pa » dans le rayon Ra,
- Établissement de la longueur maximale « Rb » du rayon dans lequel l'antenne 1 détecte des émetteurs de catégorie de puissance « B », inférieure à « Pa »,
- Tri des émetteurs de puissance supérieure à « Pb » dans le rayon Rb,
- Etablissement de la longueur maximale « Rc » du rayon dans lequel l'antenne 1 détecte des émetteurs de catégorie de puissance « C »,
- Tri des émetteurs de puissance > Pc dans le rayon « Rc ».

Il convient de noter que les niveaux de puissance et les rayons peuvent être prédéterminés et/ou accessibles à l'opérateur. De plus, le nombre de catégories de puissances et de rayons à prendre en considération par l'application logicielle peut être modifié par rapport à l'exemple ci-dessus. Par ailleurs, sur la liste proposée s'affichant sur l'écran 4 du téléphone portable 3, l'émetteur le plus proche dans la catégorie « A » pourra être affiché en tête de liste, suivi de l'émetteur le plus proche dans les catégories « B » et « C » confondues.

Selon une autre caractéristique de l'invention, d'autres paramètres que le rayon, tels que par exemple la topographie du terrain s'étendant entre l'antenne 1 et les émetteurs potentiels 2a, 2b, 2c, 2d, 2e, etc., les chaînes diffusées, peuvent également être pris en considération par l'application logicielle dans le cadre de l'établissement de la liste d'émetteurs les plus appropriés proposée. Dans ce cas, l'appareil mobile comportera avantageusement des moyens de détermination de la topographie du terrain s'étendant autour de ladite antenne et des moyens de transmission des données relevées par ces derniers vers les moyens de traitement de données de l'appareil mobile.

Une fois établie par l'application logicielle, la liste d'émetteurs les plus appropriés s'affiche sur l'écran 4 du téléphone portable 3, laissant à l'installateur la possibilité de choisir de manière très rapide et efficace, par exemple l'émetteur 2a parmi les émetteurs 2a, 2c, 2e proposés, l'avantage étant que le tri parmi les émetteurs disponibles est effectué de manière automatique par le dispositif selon l'invention et non pas par l'utilisateur.

Conformément à l'invention, l'application logicielle est configurée pour comparer ensuite les données de géolocalisation de ladite antenne 1 avec celles de l'émetteur 2a sélectionné par l'installateur, afin d'activer des moyens de genèse d'un signal représentatif de la direction géographique vers laquelle l'antenne 1 doit être orientée par l'installateur, comme par exemple une flèche s'affichant sur l'écran 4 du téléphone portable 3.

Pour orienter l'antenne 1, il suffit par conséquent à l'utilisateur de suivre les indications affichées sur l'écran 4 de son téléphone portable 3 et de se laisser guider au fur et à mesure de son intervention.

En effet, l'application logicielle est également conçue apte à exploiter les données relatives à l'intensité du signal reçu par l'antenne 1, au fur et à mesure de l'intervention de l'installateur pour orienter l'antenne 1, afin d'activer des moyens de genèse d'un signal représentatif de la qualité de l'orientation, permettant lui aussi de fournir à l'installateur une information particulièrement utile.

Conformément à l'invention, les moyens de genèse d'un signal représentatif de la qualité de l'orientation géographique sont définis par des moyens de genèse d'un signal lumineux s'affichant sur l'écran 4 du téléphone mobile 3 et/ou des moyens de genèse d'un signal sonore émis par le téléphone portable 3. Ils sont préférentiellement conçus aptes à générer un signal d'intensité variable informant l'installateur du niveau de réception du signal par l'antenne 1. Dans le même but, le signal sonore ou lumineux émis peut être assorti d'une appréciation relative au niveau de réception par exemple bon, moyen, mauvais, du signal, sous forme de texte et/ou de couleurs.

En pratique, le dispositif selon l'invention capte les signaux d'un ou de plusieurs émetteurs de radiodiffusion et/ou télédiffusion localisé(s) dans les environs du téléphone portable 3.

L'application logicielle installée sur le téléphone portable 3 propose à l'installateur un choix d'émetteurs intéressants 2a, 2c, 2e, en s'appuyant sur les coordonnées du lieu d'installation de l'antenne 1, d'une base de données résidente dans l'application ou disponible en ligne, et d'un algorithme de tri et d'affichage des différents émetteurs 2a, 2b, 2c, 2d, 2e disponibles.

La liste proposée s'accompagne préférentiellement d'indications relatives aux caractéristiques principales des différents émetteurs 2a, 2c, 2e proposés (comme notamment leur puissance d'émission, leur localisation, éventuellement les canaux et chaines disponibles), ainsi que la distance d'éloignement de chacun d'entre eux et leur direction. L'opérateur fait ensuite le choix de l'émetteur parmi la liste affichée.

Puis, l'application logicielle indique la direction géographique de l'émetteur sélectionné et la force des signaux d'ores et déjà reçus par l'antenne 1.

L'opérateur oriente ensuite l'antenne 1 dans la direction indiquée par l'application logicielle et recherche le maximum de signal à l'aide des signaux visuels et/ou sonores générés. A cet effet, il peut manipuler l'antenne lui-même manuellement, ou piloter à distance, au moyen de son appareil mobile 3, des moyens de déplacement automatique dont est pourvue l'antenne 1.

Il convient encore de noter que la connexion du téléphone portable 3 à l'antenne 1 pour l'acquisition du niveau de signal et la transmission d'éventuelles commandes peut être faite à différents moments après l'initialisation de l'application logicielle.

Cette dernière peut également être dotée d'un système de rétablissement si la liaison entre le téléphone portable 3 et l'antenne 1 est interrompue.

Par ailleurs, selon une caractéristique additionnelle, l'application logicielle peut également être exploitée pour programmer, si besoin, les caractéristiques de l'antenne 1, tels que le gain ou le pontage du dispositif d'amplification éventuel, une commutation de filtres, etc. Une telle programmation pourra s'effectuer automatiquement en fonction de l'analyse des signaux reçus ou manuellement suite à une décision de l'opérateur, au travers de l'interface utilisateur 4 de l'appareil mobile 3.

## Revendications

1. Dispositif d'assistance à l'orientation d'une antenne (1) en direction d'un émetteur (2a), ladite antenne étant destinée à réceptionner un signal radioélectrique émis par l'émetteur, ledit dispositif comportant des moyens de mesure (10) de l'intensité du signal radioélectrique reçu en provenance de l'émetteur (2a) couplés à des moyens de transmission (20) des données mesurées à travers un réseau de communication (30), ainsi qu'un appareil mobile (3) pourvu de moyens de réception desdites données mesurées, de moyens de traitement des données mesurées reçues et de moyens de genèse d'un signal représentatif de la qualité de ladite orientation, **caractérisé en ce que** les moyens de mesure (10) de l'intensité du signal radioélectrique reçu par l'antenne (1) en provenance de l'émetteur (2a) sont intégrés à l'antenne (1) et **en ce que** lesdits moyens de traitement consistent en au moins une application logicielle exécutée:
- pour exploiter des données de géolocalisation de ladite antenne (1) relevées par un système de positionnement ou stockées dans des moyens mémoire dudit appareil mobile (3), ainsi que des caractéristiques au moins de géolocalisation et de puissance d'émission, d'une pluralité d'émetteurs (2a, 2b2, 2c, 2d, 2e) enregistrés dans une base de données stockée dans les moyens mémoire dudit appareil mobile (3) ou d'un serveur distant, et activer des moyens de fourniture automatique d'une liste d'émetteurs potentiels (2a, 2c, 2e) via une interface utilisateur (4) dudit appareil mobile (3),
- pour comparer les données de géolocalisation de ladite antenne (1) avec celles de l'émetteur (2a) sélectionné, afin d'activer des moyens de genèse d'un signal représentatif de la direction géographique vers laquelle l'antenne (1) doit être orientée, et
- pour exploiter les données relatives à l'intensité du signal radioélectrique reçu par l'antenne (1), et activer lesdits moyens de genèse d'un signal représentatif de la qualité de ladite orientation.

2. Dispositif selon la revendication 1, **caractérisé en ce que** les moyens de transmission (20) des données mesurées sont définis par une interface de communication de type Bluetooth ou Wi-fi, solidaire de ladite antenne (1).

3. Dispositif selon l'une quelconque des revendications 1 ou 2, **caractérisé en ce que** le système de positionnement comporte un récepteur/émetteur de position et une boussole.

4. Dispositif selon l'une quelconque des revendications précédentes, **caractérisé en ce que** ledit appareil mobile comporte des moyens de détermination de la topographie du terrain s'étendant autour de ladite antenne (1).

5. Dispositif selon l'une quelconque des revendications précédentes, **caractérisé en ce que** les moyens de genèse d'un signal représentatif de la qualité de l'orientation de ladite antenne sont définis par des moyens de genèse d'un signal lumineux et/ou des moyens de genèse d'un signal sonore.

6. Dispositif selon la revendication 5, **caractérisé en ce que** les moyens de genèse d'un signal lumineux et/ou les moyens de genèse d'un signal sonore sont conçus aptes à générer un signal d'intensité variable.

7. Procédé d'assistance à l'orientation géographique d'une antenne destinée à réceptionner un signal radioélectrique émis par un émetteur, au moyen d'un dispositif selon l'une quelconque des revendications précédentes, comportant les étapes suivantes :
- Identification de ladite antenne (1) et mise en œuvre de moyens de récupération de ses données de géolocalisation,
- Mise en œuvre des moyens de traitement de données de l'appareil mobile pour traiter les données de géolocalisation de ladite antenne en vue d'une détermination d'au moins un émetteur (2a, 2c, 2e) approprié, à partir des données de géolocalisation de l'antenne (1) et d'un enregistrement de données relatives à des caractéristiques au moins de géolocalisation et de puissance d'émission d'une pluralité d'émetteurs (2a, 2b, 2c, 2d, 2e),
- Mise en œuvre de moyens de détermination et d'indication automatique d'une direction d'orientation géographique privilégiée de ladite antenne (1), à partir de ses données de géolocalisation et de celles de l'émetteur approprié (2a) sélectionné,
- Connexion dudit appareil mobile à ladite antenne (1) via ledit réseau de communication (30), **caractérisé en ce qu'**il comporte en outre une étape
- De mesure de la puissance du signal radioélectrique reçu par l'antenne (1) en provenance de l'émetteur (2a) sélectionné, et d'exploitation des données mesurées, ainsi qu'une étape
- D'émission d'un signal représentatif du niveau de réception du signal radioélectrique par l'antenne (1).

8. Procédé selon la revendication 7, **caractérisé en ce que** la détermination d'au moins un émetteur approprié (2a, 2c, 2e) consiste à mettre en œuvre des moyens de catégorisation automatique des émetteurs disponibles (2a, 2b, 2c, 2d, 2e) en fonction au moins de leur puissance d'émission et de leur proximité par rapport à ladite antenne (1).

9. Procédé selon la revendication 8, **caractérisé en ce que** pour catégoriser les émetteurs disponibles (2a, 2b, 2c, 2d, 2e) on tient compte des données relevées par des moyens de détermination de la topographie du terrain s'étendant autour de ladite antenne (1) que comporte ledit appareil mobile.

10. Procédé selon l'une quelconque des revendications 7 à 9, **caractérisé en ce que** les données de géolocalisation de ladite antenne (1) sont récupérées automatiquement en temps réel, à partir d'un système de positionnement que comporte l'appareil mobile (3), ou à partir de données préalablement enregistrées dans les moyens mémoire dudit appareil mobile (3).

11. Procédé selon l'une quelconque des revendications 7 à 10, **caractérisé en ce que** lors de l'émission d'un signal représentatif du niveau de réception du signal par l'antenne (1), on active également des moyens de fourniture d'une indication relative à la qualité du niveau de réception.
